# FASCICULE DE BREVET EUROPEEN

(11) **EP 0 877 667 B1**
(45) Date de publication et mention de la délivrance du brevet: **04.09.2002**
(21) Numéro de dépôt: 97902132.6
(22) Date de dépôt: 14.02.1997
(51) Int. Cl.: B60B 7/20, B60B 7/06, B60B 7/08

(54) **ENJOLIVEUR POUR ROUE DE VEHICULES**
ZIERBLENDE FÜR FAHRZEUGRÄDER
HUBCAP FOR A VEHICLE WHEEL

(30) Priorité: 14.02.1996 CH 38096
(43) Date de publication de la demande: 18.11.1998
(73) Titulaire: GISIN, Heinz, 8302 Kloten (CH)
(72) Inventeur: ALAOUI, Mrani, Mustapha, CH-1201 Genève (CH)
(74) Mandataire: Dietlin, Henri
(86) Numéro de dépôt international: CH9700049
(87) Numéro de publication internationale: WO97029918

(56) Documents cités:
- EP-A- 0 087 607
- EP-A- 0 466 622
- DE-U- 8 807 263
- US-A- 5 588 715

## Description

La présente invention est du domaine des accessoires pour véhicules automobiles et concerne plus particulièrement un enjoliveur de roues.

Les roues de la plupart de véhicules sont équipées de plaques décoratives recouvrant le moyeu des roues, dont un des buts est d'éviter les salissures sur les boulons de fixation de la roue. Dans certains cas on a déjà proposé d'utiliser ces plaques comme supports publicitaires. Lorsque l'élément décoratif porte un texte publicitaire on fera en sorte que la plaque reste dans une position prédéterminée, surtout lorsque le véhicule est à l'arrêt, c'est-à-dire quand un observateur peut voir tranquillement le slogan publicitaire.

Dans le brevet européen 0.466.622 on décrit un tel type d'enjoliveur constitué d'une part par un dispositif de fixation et de support solidaire du moyeu ou de la jante et d'autre part par un élément écran monté sur ledit dispositif en rotation. Cet élément écran présente une répartition asymétrique de sa masse pour conserver une position angulaire fixe par rapport à l'horizontale.

D'autre part, si on examine l'enjoliveur décrit dans la demande de brevet européen 0 087 607 ayant les caractéristiques du préambule de la revendication 1, on remarque que cet enjoliveur résulte d'une injection de résine synthétique et présente par conséquent une certaine élasticité. Il comprend sur son pourtour quatre dégagements (46) permettant de le positionner contre une jante, les quatre dégagements recevant les boulons de fixation de la jante. Par une rotation, le rebord (42) de l'enjoliveur coulisse librement sous les boulons pour arriver é une position intermédiaire (48), dans laquelle il est retenu. Le caractère élastique de l'enjoliveur lui permet ainsi de se maintenir entre les quatre boulons, mais la fixation ainsi réalisée est peu solide et ne permet pas de résoudre le problème posé par les enjoliveurs de l'art antérieur. D'autre part, l'enjoliveur représenté dans l'antériorité EP 466 662 est un enjoliveur destiné à un type de marque de voiture, présentant une dimension particulière et quatre boulons. Il ne peut être adapté de par sa conception sur d'autres roues que celle pour la quelle il a été réalisé.

Le problème soulevé par cette forme d'exécution est qu'il faut adapter à chaque type de roue le dispositif de fixation et de support. Le but de la présente invention est de proposer un dispositif de fixation et de support d'un enjoliveur aisément adaptable à tout type de roue.

Ce dispositif est caractérisé par un corps cylindrique muni à une extrémité d'une embase à épaulement tronconique apte à coopérer avec les têtes des boulons de fixation de la roue et à l'autre extrémité d'un couvercle de fixation dudit enjoliveur, le corps cylindrique comportant sur sa périphérie des dégagements autorisant le passage de la clef de serrage des boulons.

Dans une variante préférentielle, l'embase et le corps cylindrique sont constitués par des éléments modulables.

Le dessin annexé représente, à titre d'exemples non limitatifs, des formes d'exécution de l'objet de l'invention.

La figure 1 est une coupe transversale d'une partie de la jante d'une roue, sur laquelle un dispositif de fixation et de support de l'enjoliveur est maintenu grâce aux écrous de fixation de la roue.

Les figures 2 à 4 représentent, en coupe transversale, des variantes d'un dispositif de fixation et de support de l'enjoliveur, dans une forme d'exécution à éléments modulables. Plus précisément :

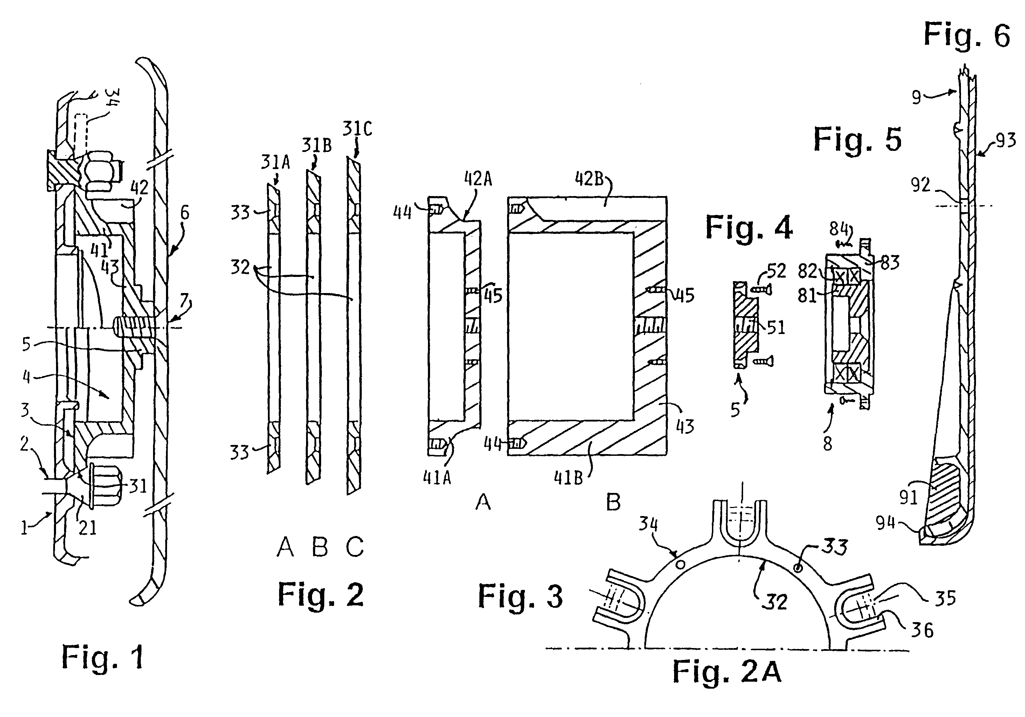

La figure 2 représente trois variantes A, B et C de plaques de base d'un tel dispositif.
La figure 2A représente une autre variante d'une plaque de base.
La figure 3 propose deux variantes A et B d'un couvercle cylindrique.
La figure 4 montre un support d'enjoliveur.
La figure 5 est une coupe transversale d'un roulement à billes, utilisé dans des cas particuliers.
La figure 5 est une coupe transversale d'un enjoliveur à répartition de masse asymétrique.

Dans la vue générale de la figure 1, on a schématisé la jante 1 d'un véhicule et les boulons 2 de fixation de la roue. Ces boulons de fixation présentent une partie tronconique 21 destinée à s'engager dans une ouverture correspondante de la roue.

Pour maintenir le dispositif selon l'invention, on prévoit à son extrémité faisant face à la jante une embase 3 présentant extérieurement un épaulement tronconique 31.

L'embase 3 est prolongée par un corps cylindrique 4 formant couvercle dont la paroi 41 comporte des dégagements 42 pour le passage de la clé de serrage des boulons 2 et dont le fond 43 est constitué par un flasque destiné à coopérer, au moins indirectement avec l'enjoliveur selon l'invention.

Dans la variante représentée à la figure 1, le fond 43 comporte un rehaut 5 destiné à recevoir un enjoliveur 6, qui vient s'y fixer par exemple au moyen d'une vis centrale 7. On notera dans cette figure que l'embase 3, le corps cylindrique 4 et le rehaut 5 sont venus de fabrication en une seule pièce. On peut prévoir de réaliser celle-ci en série et de l'usiner par la suite en l'adaptant à chaque cas particulier, en ce qui concerne le positionnement et le nombre des fraisages latéraux constituant les dégagements 42, ainsi que les dimensions extérieures de l'embase 3.

Dans un mode d'exécution préférentiel, ces différents composants sont constitués par des pièces indépendantes modulables selon les besoins. Comme représenté à la figure 2, on peut avoir des embases constituées par une rondelle A, B ou C dont l'épaulement tronconique 31A, 31B ou 31C respectivement est réalisé sur des diamètres croissants pour s'adapter aux diamètres standards des jantes. On notera au dessin le dégagement central 32, destiné à recevoir la partie centrale en saillie de la jante, ainsi que les passages 33 pour les éléments de fixation de l'embase 3 sur le corps cylindrique 4.

La variante de la plaque de base de la figure 2A présente quatre ou cinq dégagements 35 comprenant sur leur pourtour un épaulement tronconique 36 destiné à recevoir les boulons ou écrous 21 de fixation de la jante. La variante de la figure 2A permet une utilisation pour plusieurs types de roues présentant des emplacements de boulons de fixation placés sur différents diamètres.

A la figure 3 on a représenté deux corps cylindriques 4A et 4B, de profondeurs différentes, mais il va de soi que selon les besoins on peut prévoir d'autres variantes permettant d'adapter le support d'enjoliveur à tout type de roue. Sur la face en regard de l'embase, chaque corps cylindrique comporte des passages taraudés 44 destinés à recevoir les vis de fixation de l'embase. Sur la face opposée, chacun comporte en outre des passages taraudés 45 destinés à la fixation de l'enjoliveur. On notera que le corps cylindrique 4A comporte un dégagement 42A sur tout le pourtour de la pièce, tandis que le corps cylindrique 4B comporte une série de dégagements axiaux 42B, dont un seul est visible au dessin, ces dégagements permettant le passage de la clé destinée à serrer l'ensemble sur la roue du véhicule.

La figure 4 représente le support 5 d'enjoliveur qui vient vissé par des vis 52 dans le fond 43 du corps cylindrique 4A ou 4B choisi en fonction de la forme particulière de la roue à équiper. Comme déjà mentionné, ce support comporte un passage central taraudé 51.

On a schématisé à la figure 5 un roulement à billes 8 comportant une partie intérieure 81 destinée à être vissée sur le support 5, au moyen d'une vis non représentée au dessin venant en prise avec le passage taraudé 51. Les éléments 82 constituent le roulement à proprement parler. La partie extérieure 83 sera fixée au moyen de vis 84 dans l'enjoliveur 9 représenté à la figure 6.

L'enjoliveur 6 représenté à la figure 1 est fixe par rapport au dispositif décrit, tandis que l'enjoliveur 9 de la figure 6 comporte sur une partie de son pourtour une partie lestée 91 destinée à maintenir l'enjoliveur dans une position prédéterminée quelle que soit la position de la roue.

L'enjoliveur présente en son centre un trou 92 destiné au passage de la clef de serrage. Des supports publicitaires peuvent être appliqués directement sur l'envoliveur 9 ou sur une pièce rapportée 93 clipée sur l'enjoliveur à l'aide d'un tenon de fixation 94.

La forme d'exécution avec les éléments modulables représentés aux figures 2 à 6 permet de réaliser aisément le support correspondant à la roue à équiper.

## Revendications

1. Dispositif de fixation et de support d'un enjoliveur pour roue de véhicule sur le moyeu ou la jante de celle-ci, **caractérisé par** un corps cylindrique (4) muni à une extrémité d'une embase (3; 34) à épaulement tronconique (31) destiné à recevoir les têtes des boulons (2) de fixation de la roue et à l'autre extrémité d'un couvercle (43) de fixation dudit enjoliveur (6,9), le corps cylindrique comportant sur sa périphérie des dégagements (42) autorisant le passage de la clé de serrage des boulons.

2. Dispositif de fixation selon la revendication 1, **caractérisé en ce que** l'embase (3;31), le corps cylindrique (4;41) et le support d'enjoliveur (5) sont constitués par des éléments modulables.

3. Dispositif de fixation selon la revendication 1, **caractérisé en ce que** l'embase (34) présente quatre ou cinq dégagements radiaux (33) correspondant à l'emplacement des écrous ou boulons des roues à équiper, les épaulements tronconiques (36) étant placés sur le pourtour intérieur des dégagements radiaux.

4. Dispositif de fixation selon la revendication 1, **caractérisé en ce qu'**une pièce rapportée (93) destinés à présenter un support publicitaire présente au moins une pièce de fixation (94) agencée pour retenir la pièce sur l'enjoliveur.

## Claims

1. Fixing mechanism and support for a vehicle hub cap on the hub or the rim, **characterised by** a cylindrical body (4) fitted at each end with a mounting flange (3; 34) with a truncated cone thrust collar fitting (31) to house the fixing nut heads (2) of the wheel and at the other end a hub cap fixing cover (43) of the hub cap (6, 9), the cylindrical body with peripheral cutaways (42) allowing the passage of a spanner to tighten the nuts.

2. Fixing mechanism as in claim 1, **characterised by** the fact that the mounting flange (3; 31), the cylindrical body (4; 41) and the hub cap support (5) are comprised of modular elements.

3. Fixing mechanism as in claim 1, **characterised by** the fact that the mounting flange (34) has four of five radial cutaways (35) that correspond to the position of the bolts or nuts of the wheel to be fitted with the truncated cone thrust collar fitting (36) placed on the inner periphery of the radial cutaways.

4. Fixing mechanism as in claim 1, **characterised by** the fact that an insert (93) used to hold an advertising support has at least one fixing piece (94) arranged to hold the element on the hub cap.

## Patentansprüche

1. Vorrichtung zur Befestigung und Halterung einer Radkappe für Fahrzeugrad auf dessen Nabe oder Felge, **gekennzeichnet durch** einen zylindrischen Körper (4), an einem Ende mit einem Untersatz (3; 34) mit kegelstumpfartigem Ansatz (31) versehen, bestimmt für die Aufnahme der Befestigungsbolzen (2) des Rads, und am anderen Ende mit einer Befestigungskappe (43) der besagten Radkappe (6, 9), wobei der zylindrische Körper in seiner Peripherie Aussparungen (42) aufweist, um den Durchgang des Schlüssels zum Anziehen der Bolzen zu ermöglichen.

2. Vorrichtung zur Befestigung nach Anspruch 1, **dadurch gekennzeichnet, dass** der Untersatz (3; 31), der zylindrische Körper (4; 41) und die Halterung der Radkappe, (5) aus modulierbaren Elementen gebildet werden.

3. Vorrichtung zur Befestigung nach Anspruch 1, **dadurch gekennzeichnet dass** der Untersatz (34) vier oder fünf radiale Aussparungen (35) aufweist, die der Stelle der Schraubenmuttern oder Bolzen der auszurüstenden Räder entsprechen, wobei die kegelstumpfartigen Ansätze (36) im inneren Umfang der radialen Aussparungen angeordnet sind.

4. Vorrichtung zur Befestigung nach Anspruch 1, **gekennzeichnet durch** ein angesetztes Teil (93), bestimmt zum Aufweisen eines Werbeträgers mit mindestens einem Befestigungsteil (94), für die Halterung des Teils auf der Radkappe bestimmt.
